Europäisches Patentamt

European Patent Office

Office européen des brevets

(11) Publication number: **0 316 609**
**A2**

## EUROPEAN PATENT APPLICATION

(21) Application number: 88117501.2

(51) Int. Cl.4: **G06F 11/34**

(22) Date of filing: 20.10.88

(30) Priority: 20.11.87 JP 291983/87

(43) Date of publication of application:
24.05.89 Bulletin 89/21

(84) Designated Contracting States:
DE FR GB IT

(71) Applicant: KABUSHIKI KAISHA TOSHIBA
72, Horikawa-cho Saiwai-ku
Kawasaki-shi Kanagawa-ken 210(JP)

(72) Inventor: Tanaka, Koichi
438 Imaiminami-cho Nakahara-ku
Kawasaki-shi Kanagawa-ken(JP)
Inventor: Nagashima, Ichiro
19-8, Umegaoka Midori-ku
Yokohama-shi Kanagawa-ken(JP)

(74) Representative: Lehn, Werner, Dipl.-Ing. et al
Hoffmann, Eitle & Partner Patentanwälte
Arabellastrasse 4
D-8000 München 81(DE)

(54) Integrated circuit with built-in trace data collecting circuit.

(57) An integrated circuit incorporates internal circuits
and a trace data collecting circuit. The trace data
collecting circuit collects signals as trace data from
the internal circuits. The trace data collecting circuit
comprises a collecting and compressing portion that
collects the trace data from the internal circuits and
compresses the collected trace data, a storage por-
tion that stores the collected and compressed trace
data of the collecting and compressing portion, a
controlling portion that controls the collecting and
compressing portion as well as the storage portion
such that the trace data are collected according to
set tracing conditions, and a readout portion that
reads the trace data out of the storage portion and
outputs the read data to the outside of the integrated
circuit.

FIG.1

## INTEGRATED CIRCUIT WITH BUILT-IN TRACE DATA COLLECTING CIRCUIT

### BACKGROUND OF THE INVENTION

Field of the Invention

The present invention relates to a large-scale integrated circuit containing functional modules such as a microprocessor, a cache memory and a peripheral controller, and particularly to an integrated circuit having a built-in trace data collecting circuit for collecting trace data from internal circuits, i.e., functional modules of the integrated circuit.

Description of the Prior Art

Generally, in testing the operation of an integrated circuit system, operation signals are periodically sampled at data and address buses and input and output terminals of the integrated circuit. The sampled signals are stored in an exclusive storage device and used as trace data to analyze the operation of the integrated circuit system.

With a development of integration of circuits in recent years, more and more functional modules such as microprocessors, cache memories and peripheral controllers tend to be integrated in large-scale integrated circuits. To analyze operations of the functional modules i.e., internal circuits of such a large-scale integrated circuit, it is required to collect trace data from internal buses and the functional modules of the integrated circuit. However, due to a large number of terminals and high speed of signals, it is extremely difficult to collect the trace data by outputting many signals from the large-scale integrated circuit to the outside of the circuit.

To cope with this, a prior art technique disables an access to a cache memory of the circuit to forcibly access an external memory, or outputs only a small number of internal signals to the outside of the circuit. Also, the prior art decreases a clock signal frequency to reduce a signal frequency in collecting the trace data.

With such prior art techniques, the trace data of the internal circuits of the integrated circuit are not satisfactorily collected under an actual operating state of the internal circuits so that a perfect analysis of the operation may not be realized.

There is an idea to provide a storage circuit in the large-scale integrated circuit to collect trace data in the storage circuit. To do so, however, the storage circuit shall have a large capacity for accommodating enormous trace data therein, thus causing another problem of enlarging the integrated circuit.

### SUMMARY OF THE INVENTION

An object of the present invention is to provide an integrated circuit capable of collecting, in itself, trace data to be used for analyzing operations in internal circuits packaged in the integrated circuit.

In order to accomplish the object, the present invention integrates internal circuits and a trace data collecting circuit for collecting signals from the internal circuits, all together in an integrated circuit. With this arrangement, trace data can be collected under an actual operating state of the internal circuits without reducing a clock frequency and without changing operations of the internal circuits. The collection of the trace data will not be limited by the number of terminals of the integrated circuit, and the trace data may be collected from the required number of signal lines.

In addition, the trace data collecting circuit of the present invention has a collecting and compressing portion to collect and compress the trace data, and a storage portion to store the compressed trace data. Due to the compression, a necessary capacity of the storage portion may be small to enable the trace data collecting circuit to be easily packaged in the integrated circuit.

These and other objects, features and advantages of the present invention will become apparent from the following descriptions of preferred embodiments taken in conjunction with the accompanying drawings.

### BRIEF DESCRIPTION OF THE DRAWINGS

Fig.1 is a view showing an integrated circuit incorporating a trace data collecting circuit according to the present invention; and

Fig. 2 is a view showing an example of a data compression method according to the present invention.

### DETAILED DESCRIPTION OF THE PREFERRED EMBODIMENTS

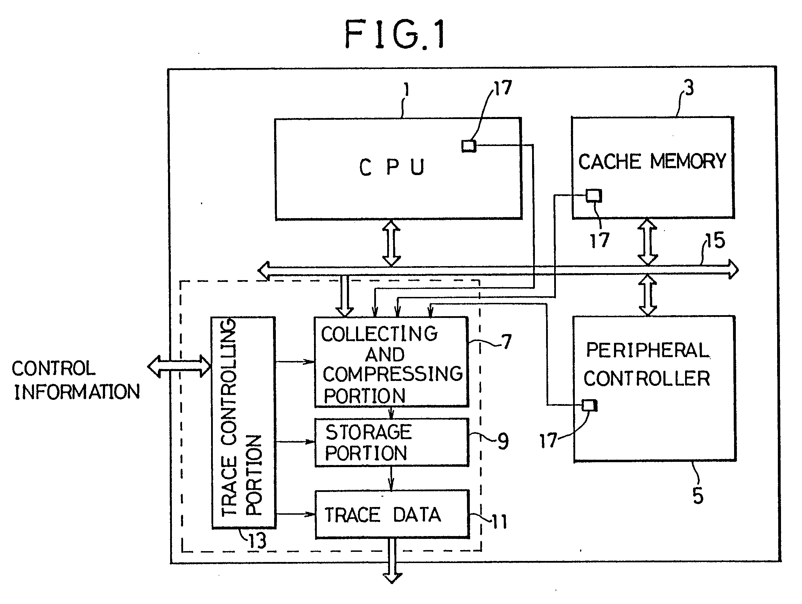

Fig. 1 is a view showing an integrated circuit incorporating a CPU 1, a cache memory 3, a peripheral controller 5 and a trace data collecting circuit. The trace data collecting circuit comprises a collecting and compressing portion 7, a storage portion 9, a readout portion 11 and a controlling portion 13.

The collecting and compressing portion 7 receives signals from an internal bus 15 and internal signal nodes 17 of the CPU 1, cache memory 3 and peripheral controller 5. The collecting and compressing portion 7 is controlled by the controlling portion 13 to select signals, compress the selected signals and output the compressed data to the storage portion 9.

The storage portion 9 stores the data collected and compressed by the collecting and compressing portion 7.

The readout portion 11 reads the trace data out of the storage portion 9 and outputs the read data to the outside of the integrated circuit.

According to tracing conditions set from the outside of the integrated circuit, the controlling portion 13 selects signals to be traced and a compression method to be used in the collecting and compressing portion 7. The controlling portion 13 also controls trace start and finish timings and the sequential storage of data from the collecting and compressing portion 7 into the storage portion 9.

When the integrated circuit is put in a set-readout mode according to a mode selection signal applied to a mode selection terminal (not shown) of the integrated circuit, the controlling portion 13 and readout portion 11 are connected to data terminals, address terminals, or control signal terminals (all the terminals not shown) for a normal mode of the integrated circuit. Via these terminals, tracing conditions are set in the controlling portion 13 and trace data are outputted from the readout portion 11.

How to collect trace data according to the present invention will be explained.

Before starting the tracing, a mode selection signal is turned ON to stop the operation of the integrated circuit and put the integrated circuit in the set-readout mode. Then, signals to be traced, compression method, start conditions and finish conditions are set in the controlling portion 13.

After the completion of the setting, the mode selection signal is turned OFF to put the integrated circuit in the normal mode to start the operation of the integrated circuit.

When the start conditions are satisfied, the controlling portion 13 activates the collecting and compressing portion 7 and storage portion 9. After the commencement of the tracing, data are collected and compressed by the collecting and compressing portion 7 and stored in the storage portion 9. When the finish conditions are satisfied, the controlling portion 13 stops the operations of the collecting and compressing portion 7 and storage portion 9 to finish the tracing.

After the completion of the tracing, the mode selection signal is turned ON to put the integrated circuit again in the set-readout mode to sequentially read the trace data stored in the storage portion 9. The read data are outputted to the outside of the integrated circuit via the terminals such as the data terminals for the normal operation.

The trace data are decoded through a decoding process opposite to the compression to analyze the operations of the internal circuits.

Several examples of the compression will be explained.

A first compression method is effective with respect to signals such as control signals of the functional modules whose values (represented by single or plural signal lines) change at long intervals. With respect to each of such signals, the following data is generated in the collecting and compressing portion 7 and stored in the storage portion 9 only when the value of the signal changes:

(name of the signal, elapsed time after a previous change, value of the signal).

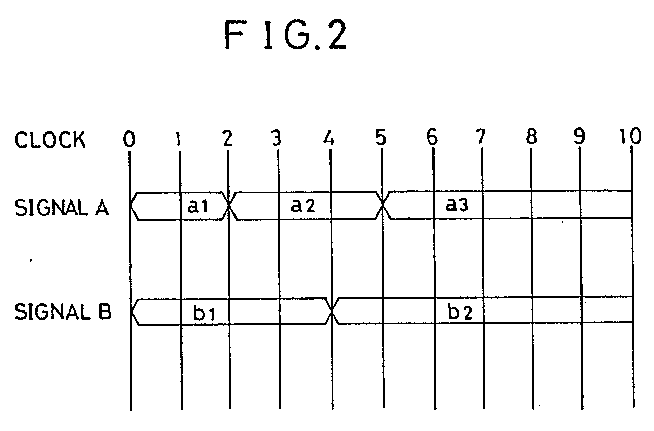

According to this compression method, a signal A and a signal B changing as shown in Fig. 2 will be stored as the following data in the storage portion 9:

(A, 0, al), (B, 0, bl), (A, +2, a2), (B, +4, b2), (A, +3, a3).

An elapsed time 0 means that the data is a trace start data.

Supposing each of the signals A and B needs eight bits for expressing the value, three bits for the name and five bits for the elapsed time, each signal after the compression requires the following bits whenever the value changes:

(3 bits + 5 bits + 8 bits) = 16 bits.

In the example shown in Fig. 2, the values of the signals change five times so that the total number of bits of the trace data will be as follows:

16 bits x 5 = 80 bits.

On the other hand, if the signals A and B sampled with respective clock signals are not compressed, i.e., if the signals are stored as they are, the following bits are needed:

(8 bits + 8 bits) x 10 clocks = 160 bits.

Therefore, according to the compression method mentioned in the above, the trace data are compressed by 50%.

A second compression method of the present invention is effective with respect to signals such as instruction fetch address signals that have a probability of changing continuously or slightly (for example, a jump instruction tends to be executed for relatively near addresses). For this kind of signals, bits of each signal are divided into a proper number of upper bits of and remaining lower bits. When only the lower bits change, the following data is generated in the collecting and compressing portion 7 and stored in the storage portion 9:
(first name of the signal, elapsed time after a previous change, values of the lower bits) ... (short type).

When the upper bits change, the following data is generated in the collecting and compressing portion 7 and stored in the storage portion 9:
(second name of the signal, elapsed time after a previous change, values of all the bits) ... (perfect type)

Here, the first name of a signal indicates that only the lower bits of the signal have changed, while the second name of the signal indicates that the upper bits of the signal have changed.

Supposing an address of a signal is represented with 32 bits of which eight are designated as lower bits, a signal name with three bits and an elapsed time with five bits. If only the lower bits change, the short type needs 16 bits and the perfect type 40 bits.

If an instruction fetch occurs every four clocks on the average, and if the upper bits change for every ten instructions, the data need the following bits according to this compression method:
(perfect type x 1 + short type x 9)
= 40 + 16 x 9
184 bits.

When values sampled with respective clocks are stored as they are, the following bits are needed:
address 32 bits x 10 instructions x 4 clocks
= 1280 bits.

Therefore, the trace data are compressed to about 14% of the original form.

A third compression method of the present invention is effective when a plurality of signals each changing continuously or slightly are cyclically and in turn collected. For example, to the internal address bus of the integrated circuit, an instruction fetch address and an operand access address are outputted in time shearing. In this case, changes in the value of each signal are checked and, when only lower bits of the signal change, a first name of the signal is used to generate the following data:
(first name of the signal, elapsed time after a previous change, values of lower bits) ... (short type).

When upper bits of the signal change, the following data are generated by using a second name of the signal:
(second name of the signal, elapsed time after a previous change, values of all the bits) ... (perfect type).

For example, to the internal address bus of the integrated circuit, an instruction fetch address and an operand access address are outputted in time shearing.

If the second compression method is simply applied for the signals of the internal address bus without identifying the instruction fetch address and the operand address each other, almost all the data shall be stored as the perfect types because their values change greatly, and no effect of the compression is expected.

To cope with this, comparison addresses are held for an instruction fetch address signal and an operand access signal respectively, and compared with them respectively. Therefore, trace data based on the instruction address signal are effectively compressed according to the second compression method. Further, trace data based on the operand address signal are also effectively compressed according to the second compression method, because relatively near operand addresses are frequently accessed.

Other than the above-mentioned compression methods, various compression methods may be applicable depending on the characteristics of signals.

Although the controlling portion 13 has been set from the outside of the integrated circuit in the above embodiment, the controlling portion 13 may be set by the CPU 1. In this case, an external setting means may be omitted.

It is possible to decode trace data and analyze operations of the internal circuits by the CPU 1. In this case, an external analyzing means is not needed.

Further, the CPU 1 can set the controlling portion 13, decode trace data and analyze operations to realize a self-diagnostic system.

Trace data stored in the storage portion 9 may be outputted to the outside of the integrated circuit according to a program executed by the CPU 1. In this case, the readout portion 11 may be omitted to reduce the manufacturing cost of the integrated circuit.

The storage portion 9 may be a first-in first-out (FIFO) storage circuit such that trace data are sequentially outputted to the outside of the integrated circuit through the readout portion 11 before the storage portion 9 is filled with data. In this case, with no restriction of the capacity of the storage portion 9, many trace data can be collected.

The storage portion 9 may be used as a memory for a normal operation of the integrated circuit.

Although preferred embodiments of the present invention have been disclosed and described, it is apparent that other embodiments and modifications of the present invention are possible by a person skilled in the art. Therefore, all variations and modifications that come within the meaning of the claims are intended to be embraced therein.

## Claims

1. A trace data collecting circuit for collecting signals from an internal circuit arranged in an integrated circuit, comprising:
(a) collecting and compressing circuit means (7) for collecting the signal from the internal circuit and compresses the collected signal;
(b) storage circuit means (9) for storing the collected and compressed signal from said collecting and compressing circuit means (7) as a trace data;
(c) control means (13) for controlling said collecting and compressing circuit means (7) and said storage circuit means (9) such that the trace data are collected according to a tracing condition; and
(d) a readout circuit means (11) for reading the trace data out of said storage circuit means (9) to the outside of the integrated circuit,
(e) said collecting and compressing circuit means (7), storage circuit means (9), controlling circuit means (13), readout circuit means (11) and the internal circuits being integrated within the integrated circuit.

2. A trace data collecting circuit for collecting signals from an internal circuit arranged in an integrated circuit including a microprocessor, comprising:
(a) collecting and compressing circuit means (7) for collecting the signal from the internal circuit and compresses the collected signal;
(b) storage circuit means (9) for storing the collected and compressed signal from said collecting and compressing circuit means (7) as a trace data; and
(c) control means (13) for controlling said collecting and compressing circuit means (7) and said storage circuit means (9) such that the trace data are collected according to a set tracing condition,
(d) said collecting and compressing circuit means (7), storage circuit means (9), controlling circuit means (13) and the internal circuits being integrated within the integrated circuit,
(e) the trace data stored in said storage circuit means (9) being outputted to the outside of the integrated circuit according to a program executed by the microprocessor.

3. The trace data collecting circuit as claimed in claim 1, wherein said storage circuit means (9) is a first-in, first-out storage circuit.

4. The trace data collecting circuit as claimed in claim 1 or 2, wherein upon receiving a signal whose value changes at long time intervals, said collecting and compressing circuit means (7) generates data comprising a name of the signal, an elapsed time after a previous change and a value of the signal only when the value of the signal changes.

5. The trace data collecting circuit as claimed in claim 1 or 2, wherein upon receiving a signal having a large probability of changing continuously and/or slightly, said collecting and compressing circuit means (7) divides the signal into a proper number of upper bits and remaining lower bits and generates data comprising a first name of the signal, an elapsed time after a previous change and values of the lower bits when only the lower bits change, while generating data comprising a second name of the signal, an elapsed time after a previous change and values of all the bits when the upper bits change.

6. The trace data collecting circuit as claimed in claim 1 or 2, wherein upon repeatedly and in turn receiving a plurality of signals having a large probability of changing continuously and/or slightly, said collecting and compressing circuit means (7) compares changes in the value of each signal with each other and uses a first name of the signal to generate data comprising a first name of the signal, an elapsed time after a previous change and values of lower bits when only lower bits of the signal change, while using a second name of the signal to generate data comprising a second name of the signal, an elapsed time after a previous change and values of all bits when upper bits of the signal change.

7. The trace data collecting circuit as claimed in claim 1, wherein the internal circuit of the integrated circuit comprise a functional module including a CPU, a cache memory and a peripheral controller.

8. The trace data collecting circuit as claimed in claim 2, wherein said controlling means (13) is set by a CPU of the microprocessor.

9. The trace data collecting circuit as claimed in claim 2, wherein the trace data is analysed by a CPU of the microprocessor.

# FIG.1

CONTROL INFORMATION

# F I G.2

EP 0 316 609 A2